# EUROPEAN PATENT APPLICATION

(11) **EP 3 318 780 A1**
(43) Date of publication of application: **09.05.2018**
(21) Application number: 17001517.6
(22) Date of filing: 11.09.2017
(51) Int. Cl.: F16H 21/42, F16H 21/20, F16H 29/04, A23N 5/00

(54) **MECHANISM TO CHANGE THE EXCURSION OF A CURSOR OF A KINEMATISM WITH ALTERNATE MOTION**

(30) Priority: 11.10.2016 IT 201600102029
(71) Applicant: CALA' S.R.L., 93100 Caltanissetta (IT)
(72) Inventor: Cala', Cataldo, I-93100 Caltanissetta (IT)
(74) Representative: Garavelli, Paolo

(57) **Abstract**

A kinematic mechanism is described, for changing the stroke of a cursor (15, 14") with reciprocating motion with respect to a fixed structure (1) and connected to a rotatable drive shaft (2, 1', 1"); the mechanism comprises: eccentric means connected to the drive shaft (2, 1', 1") and adapted to transform the rotary motion of the drive shaft (2, 1', 1") into an alternate translating motion of an articulation point (12, 6', 4") of a kinematism; guiding means for the articulation point (12, 6', 4") of a kinematism; actuating means of the guiding means; position detecting means of the guiding means; and control means of the actuating means of the guiding means.

## Description

The present invention refers to a mechanism adapted to change the stroke of a connecting rod, of a cursor made of metal or of other materials during its motion, to actuate kinematisms in which it is necessary to increase or decrease an alternate rectilinear motion, namely the distance between two return points, without stopping their movement.

Parts of machines are known, where it is necessary to obtain an alternate sliding motion; such kinematisms find multiple applications: they have already been applied to the first machines, for example pumps, mechanical presses, machines for hulling almonds, etc. Typically, the kinematisms provides for the transformation of a rotary motion of a shaft through an eccentric, a connecting rod and a cursor, which cursor, upon every rotation of the shaft, performs a stroke equal to the distance from there the center of the cam is located with respect to the center of the drive shaft.

Systems with alternate movements as previously described are also known, but with double cams housed one inside the other. To increase or decrease the stroke, it is necessary to mutually rotate the cams, increasing or decreasing their eccentricity and therefore the stroke of the alternate movement.

With the current technology, in order to intervene in the cams, it is necessary to stop the kinematism, rotate the cams obtaining the desired eccentricity, mutually block the eccentrics and restart the mechanism.

This implies the disadvantage that, according to the type of machines, the interruption of their operation, and of their production, is negative. Unavoidably, managing costs of the machines where the system is applied tend to increase.

Due to what is described above, if the cursor has to operate with double effect with the current art, it becomes even more complex to find a solution for the adjustment when moving.

Object of the present invention is solving the above described inconveniences, by providing a mechanism for changing the excursion of a cursor of a kinematism with alternate motion, which allows varying the stroke of the sliding parts during the movements of the machine, even if the moving part works with a simple or double effect.

According to the present invention, a kinematic mechanism is provided for changing the stroke of a cursor with alternate movements, which kinematism comprises, in addition to an eccentric, further leverages, hydraulic, electric and electronic controls.

Therefore, the invention provides a kinematic mechanism for changing the stroke of a cursor with alternate movement according to the enclosed claims.

It is intended that all enclosed claims are an integral part of the present description.

A detailed description is provided below of three preferred embodiments of the kinematic mechanism for changing the stroke of a cursor with alternate movements of the present invention, given as a nonlimiting example, and with reference to the enclosed drawings, in which:
Figures 1 and 2 schematically show a first embodiment of the kinematic mechanism of the present invention in two operating conditions;
Figures 3 and 4 show a particular application of the kinematic mechanism of the present invention according to its first embodiment;
Figures 5 and 6 show a further particular application of the kinematic mechanism of the present invention according to its first embodiment;
Figures 7, 8 and 9 schematically show a second embodiment of the kinematic mechanism of the present invention in two operating conditions; and
Figures 10 and 11 schematically show a third embodiment of the kinematic mechanism of the present invention in two operating conditions.

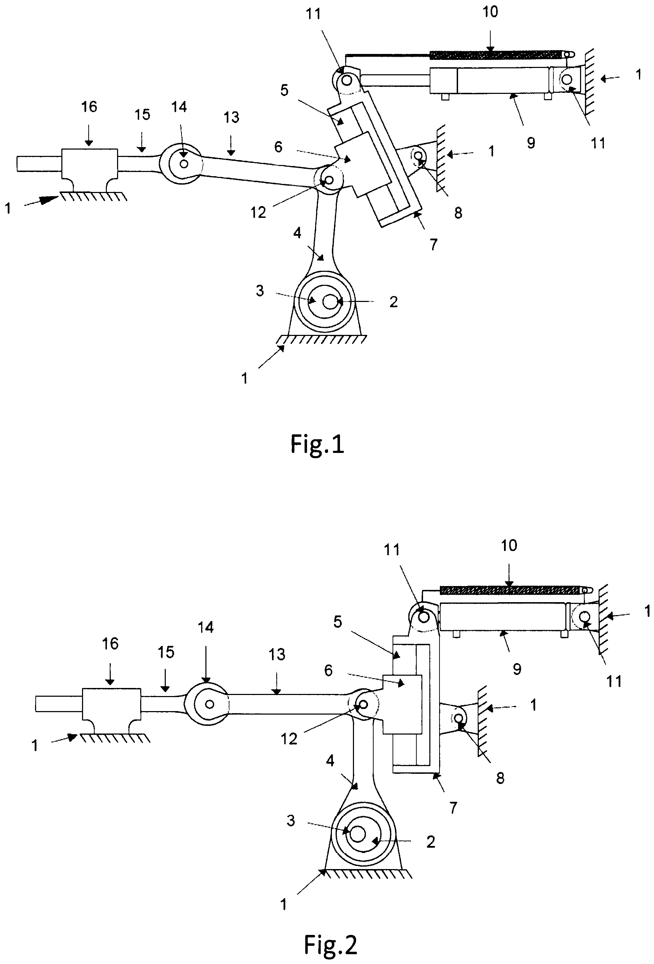

With reference to Figures 1 and 2, the first embodiment of the mechanism of the present invention will be described, together with some examples of its applications.

Figure 1 shows an example of the system, where 1 designates the blocked supports in a structure; 2 a drive shaft; 3 a cam; 4 a primary connecting rod; 5 a guide; 6 a slider; 7 a guide support; 8 a pin of the guide support; 9 an hydraulic actuator; 10 a linear transducer; 11 pins of actuator articulation; 12an articulation pin of the primary and secondary connecting rods; 13 a secondary connecting rod; 14 a connecting pin of the secondary connecting rod to the cursor; 15 a cursor; 16 a guide for the cursor.

As can be noted in Figures 1 and 2, the shaft 2 rotates the cam 3 which transmits an oscillating motion to the connecting rod 4, which, through the pin 12, actuates the slider 6 which transmits an alternate movement to the secondary connecting rod 13 which, by means of the pin 14, impresses the same movement to the cursor 15; if the guide 5 is placed at 45° with respect to a vertical axis, the stroke of the connecting rod 13 and of the cursor will be the same as the stroke of the connecting rod 4; should a shorter stroke has to be obtained, it is enough to actuate the actuator 9, decreasing the guide inclination. Through a transducer connected to a PC, one can display at how many degrees the guide 5 itself is placed and also its stroke, and, with a suitable program and an electro-hydraulic system, the various system functions can be automatically established.

As can be noted from Figure 2, if the guide is placed at 90° with respect to the secondary connecting rod 13 and to the cursor, the slider 6 will go on moving, but will transmit its motion to the secondary connecting rod only for the radius of the connecting rod 13. Should the cursor be totally stopped in this position, it is enough to apply an arcuate guide with the radius of the length of the secondary connecting rod.

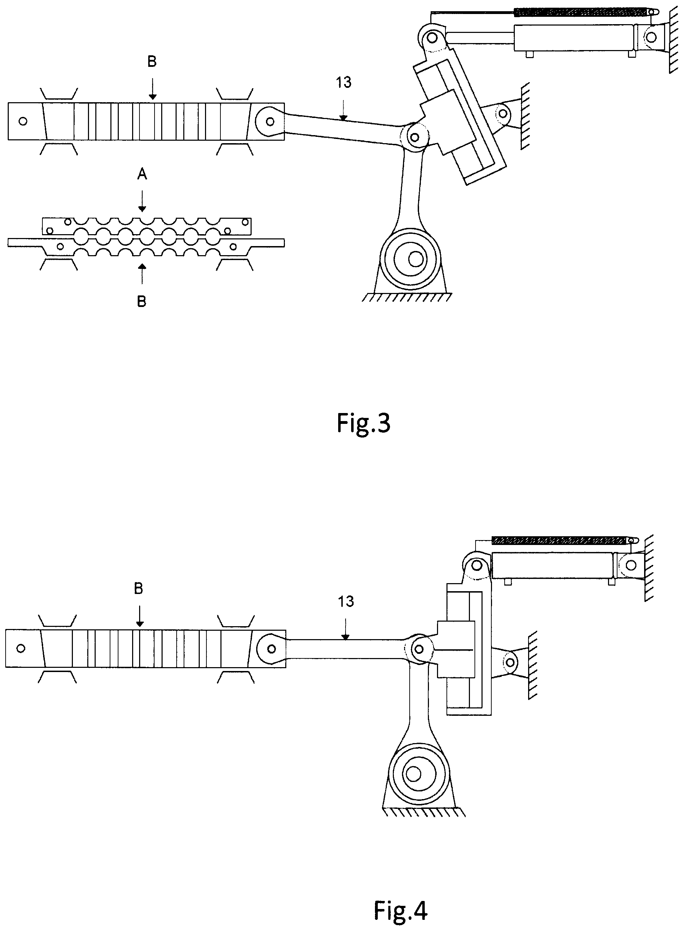

With reference now to Figures 3 and 4, an application example of the first embodiment of the mechanism of the present invention is shown.

More precisely, and as shown in Figures 3 and 4, the secondary connecting rod is applied to a jaw of an industrial machine (hulling machine for almonds).

In this type of machines, in order to break the almond shell, jaws are provided, of which one is fastened to the structure (part A) and one is moving and connected to the connecting rod 13 (plan view, part B) actuated by a connecting rod like a normal cursor.

In traditional machines, next to the opposite side of the connecting rod, a cam with double eccentric (and namely, one inside the other to change their stroke) is housed and connected to the transmission shaft. The sizes of the almonds determine the stroke of the jaw, namely if the almonds are big, it is necessary to adapt the stroke to such sizes. On the other hand, when the almonds are small or medium, it is necessary to adjust the stroke of the jaw to avoid breaking the fruit, in addition to the shell.

According to the current state of the art, to optimize the right stroke, the operator must stop the plant, operate in the cams manually, re-start the system, check if the fruits are damaged or not and start the production. Usually, an expert technician, with two or three adjustments, manages to optimize the stroke and avoid damaging the products. It is clear that, when changing the type of almonds, it will be necessary to adjust the mechanism again.

According to the present invention and as shown and described with reference to Figures 3 and 4, it is possible to adapt/optimize the stroke of the jaw according to the sizes of the almonds to be hulled when working them, due to the chance of displaying on a PC and of programming the excursion of the secondary connecting rod depending on the types of products to be worked.

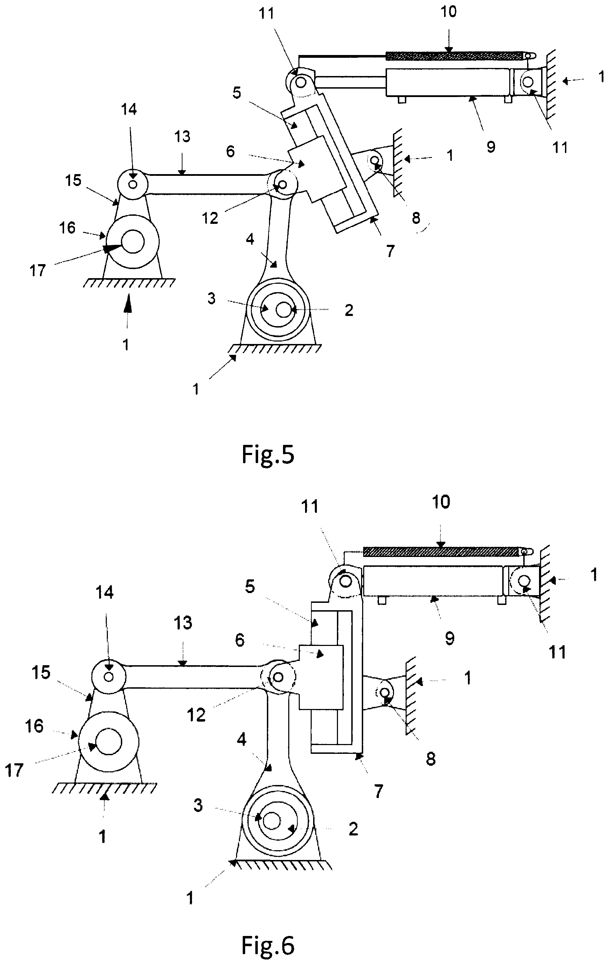

With reference now to Figures 5 and 6, they show a second application of the mechanism of the present invention. According to this application, the mechanism is used as revolution varying device to be applied on industrial machines or motor vehicles. In particular, in self-propelled machines, the mechanism can replace clutch and gearbox, both manual and automatic types.

More precisely and as shown in Figures 5 and 6, the shaft 2, directly connected to the shaft of the endothermal engine, when rotating, will oscillate the cam 3, which, through the connecting rod 4, actuates the kinematic mechanism of the present invention.

The secondary connecting rod 13, hinged to an arm 15, during its alternate movement, will rotate the shaft 17 through a free wheel 16; in order to obtain the two rotation directions of the shaft 17, the free wheel must be of the bi-directional type.

It is necessary to point out here that, with a single kinematism, the drive shaft 2 will rotate continuously, while the shaft 17 has an alternate rotation.

If it is necessary to obtain a continuous rotation of the shaft 17, it will be necessary to apply three mechanisms in the same shafts (one beside the other) connecting the guide supports with a single actuator. The three cams must be blocked onto the shaft 2 with a 120° difference between them, obtaining a continuous rotation of the shaft 17.

The invention allows obtaining a revolution variation of the shaft 17 and, therefore, a variable speed of the vehicle, or allows stopping it through a simple manual control or automatically, through the transducer together with one of the sensors (not shown) connected to a PC and controlled by a pre-set program, which takes into account the required torque and the revolutions of the endothermal engine. In this configuration, the operator is required to actuate only the engine accelerator.

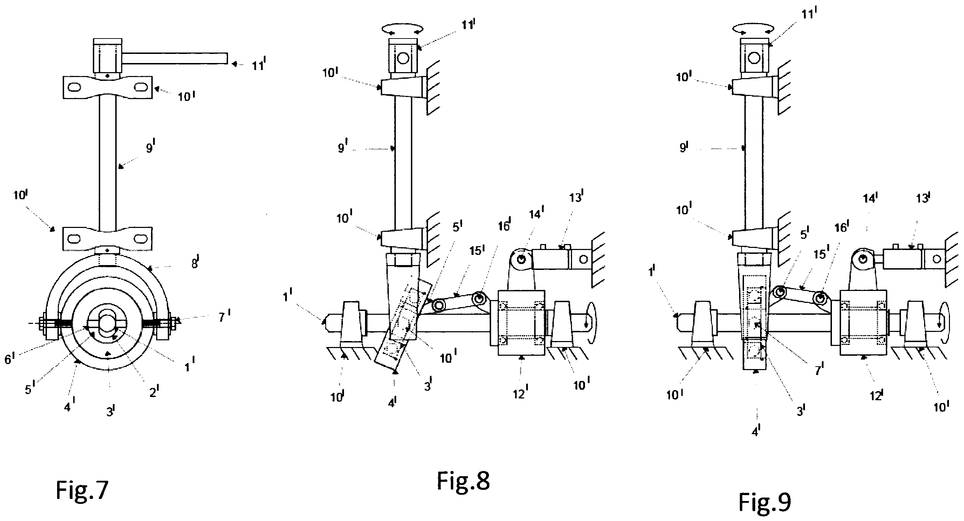

With reference now to Figures 7, 8 and 9, they show a second embodiment of the mechanism of the present invention.

As it is possible to note in Figures 7, 8 and 9, according to this embodiment, the following components are provided: 1', drive shaft; 2', slit; 3', bearing; 4', external support; 5', internal bearing support; 6', gudgeon between shaft and support; 7', pins between fork and bearing support; 8', fork; 9', shaft integral with the fork; 10', bearing supports; 11', support with arm; 12', barrel; 13', actuator; 14', connecting pin of actuator to sleeve; 15', tie rod; 16', connecting pin.

As can be noted in Figures 7, 8 and 9, the shaft 1', when rotating, transmits its rotation to the bearing 3' through the gudgeon 6', which is housed in the support 5' which provides the rotation transmission and which allows the bearing 3' and the supports 4' and 6' to be slanted (as can be seen in Figure 8). The inclination is given by the actuator 13', through the pin 14', to the barrel 12' with the pin 16' and the tie rod 15'.

More precisely, if through the actuator 13' the bearing 3' is placed at 90° with respect to the shaft 1', a rotation is obtained only of the bearing 3', while the fork 8' and the shaft 9' remain unmoving. On the other hand, if an oscillating movement has to be obtained for the fork 8' and the shaft 9', it will be necessary to slant the bearing 3'. Actually, even a small inclination will transmit to the bearing 3' an oscillating rotation, and so, if the arm 11' is connected to a cursor or to a free wheel, the same effects will be obtained as for the first embodiment of the mechanism of the present invention. It must be noted here that the variation of the stroke of the shaft 9' is proportional to the inclination of the bearing 3'.

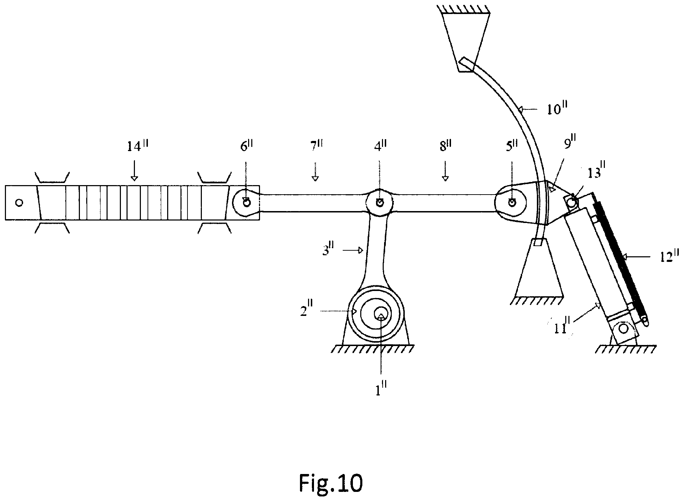

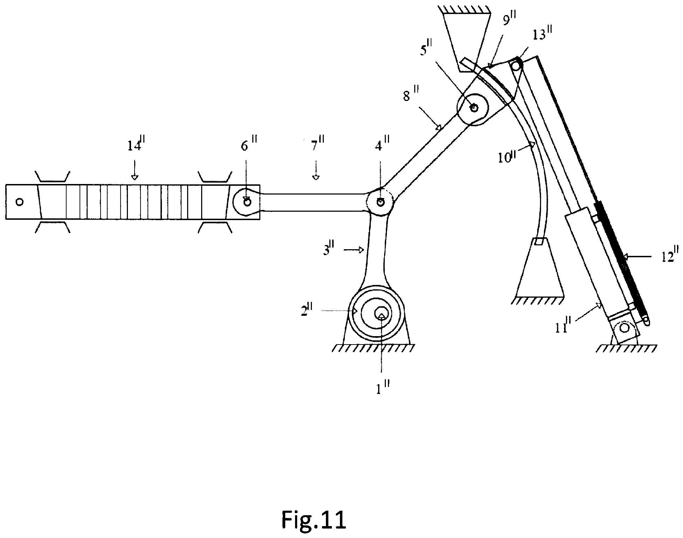

With reference now to Figures 10 and 11, they show a third embodiment of the mechanism of the present invention.

According to this embodiment, the following components are provided: 1", transmission shaft; 2", eccentric or cam; 3", primary connecting rod; 4", central pin of the kinematism; 5", pin for the guide; 6", pin for the jaw or cursor; 7", secondary connecting rod; 8", third connecting rod for changing the stroke; 9", guide; 10", rail; 11", actuator; 12", transducer; 13", articulation pin of the actuator; and 14", jaw or cursor.

With this arrangement, an oscillation of the guide 9" with respect to the fixed structure implies a displacement of the articulation point 4" with respect to the fixed structure.

The invention has several advantages with respect to the other prior art systems and/or mechanisms.

A first advantage is that the mechanical forces are transmitted directly with a limited energy dispersion and apart from frictions inherent to the kinematism and, therefore, with a high efficiency.

In fact, with respect to known varying devices applied on industrial machines and motor vehicles, such as for example the hydraulic system with pump and engines with variable flow-rate, which disperses about 20% of energy due to the oil capability of being compressed, by being transformed into thermal energy and being dispersed in the environment, or the epicyclical mechanical system, in which the transmission occurs through friction, actually limited to very low torques, the present invention has a higher efficiency with respect to the above prior art systems.

Another advantage is that the present invention totally changes the old systems due to its simple realization, its reduced power dispersion and its easy management.

## Claims

1. Kinematic mechanism for changing the stroke of a cursor (15, 14") with reciprocating motion with respect to a fixed structure (1) and connected to a rotatable drive shaft (2, 1', 1"),
**characterized in that** it comprises
- eccentric means connected to said drive shaft (2, 1', 1") and adapted to transform the rotary motion of said drive shaft (2, 1', 1") into an alternate translating motion of an articulation point (12, 6', 4") of a kinematism;
- guiding means for said articulation point (12, 6', 4") of a kinematism;
- actuating means of said guiding means;
- position detecting means of said guiding means; and
- control means of said actuating means of said guiding means.

2. Kinematic mechanism according to claim 1, wherein said eccentric means comprise a cam (3, 2") connected to said drive shaft (2, 1', 1"), and a primary connecting rod (4, 3") which comprises said articulation point (12, 6', 4") of said kinematism.

3. Kinematic mechanism according to claim 1 or 2, wherein said guiding means comprise:
- a guide (5);
- a slider (6) slidingly assembled on said guide (5) and connected to said articulation point (12) of said kinematism; and
- a supporting element (7) of said guide (5) oscillatingly assembled with respect to said fixed structure (1);
the arrangement being such that an oscillation of said guide (5) with respect to said fixed structure (1) implies a displacement of said articulation point (12) with respect to said fixed structure (1).

4. Kinematic mechanism according to claim 1 or 2, wherein said guiding means comprise:
- a track (10"); and
- a guide (9") slidingly assembled on said track (10") and connected to said articulation point (4") of said kinematism;
the arrangement being such that an oscillation of said guide (9") with respect to said fixed structure implies a displacement of said articulation point (4") with respect to said fixed structure.

5. Kinematic mechanism according to claim 1, wherein said eccentric means comprise:
- a first supporting element (4') of said rotatable drive shaft (1'), said first supporting element (4') comprising a slit (2') inside which said drive shaft (1') is housed;
- a connection pin (6') of said drive shaft (1') to said first supporting element (4');
- a bearing (3') for supporting said first supporting element (4');
- a second supporting element (5') of said bearing (3');
- a support fork (8') of the assembly and oscillatingly connected to said second supporting element (5') through rotatable connecting pins (7'), said fork (8') being further connected to said articulation point (16') and adapted to give to said articulation point (16') an alternate translating movement following the rotation of said eccentric means; and
- a second shaft (9') integral with said articulation point (16') of said fork (8') and adapted to alternately slide with respect to said fixed structure.

6. Kinematic mechanism according to claim 5, wherein said guiding means comprise:
- a barrel (12') slidingly assembled onto said drive shaft (1') and hingedly connected to actuating means (13'); and
- a tie-rod or lever-type element (15') hingedly connected to said barrel (12') and to said supporting element (5') of said bearing (3');
the arrangement being such that, following an actuation of said actuating means (13'), a longitudinal displacement is obtained for said guiding means with respect to said fixed structure and consequently a variation is obtained for the inclination of said eccentric means with respect to an axis of the drive shaft (1'), transforming the rotary motion of said drive shaft (1') into an oscillating linear motion of said second shaft (9') integral with said articulation point (16') of said fork (8').

7. Kinematic mechanism according to any one of the previous claims, wherein said actuating means of said guiding means comprise an actuator (9, 13', 11") hingedly connected on said fixed structure and on said guiding means.

8. Kinematic mechanism according to claim 7, wherein said actuator (9, 13', 11") is a linear actuator of a type chosen in a group, which comprises: hydraulic actuator, or electric actuator, or pneumatic actuator, the arrangement being such that said actuator is oscillatingly assembled with respect to said fixed structure and oscillatingly connected to said guiding means.

9. Kinematic mechanism according to any one of the previous claims, wherein said position detecting means of said guiding means comprise a linear transducer (10, 12"), said linear transducer (10, 12") being connected to said actuator (9, 11") and adapted to detect a position or excursion of said actuator (9, 11").

10. Kinematic mechanism according to any one of the previous claims, wherein said control means comprise a control unit such as a data processor, a PLC, or a PC, or the like, which is connected to said position detecting means and controls an actuation of said actuating means of said guiding means.

11. Kinematic mechanism according to the previous claim, wherein said control unit is programmable to actuate said actuating means in such a way as to make said articulation point assume several pre-established configurations with respect to said fixed structure and according to an input to said control unit.
